# EUROPEAN PATENT APPLICATION

(11) **EP 3 428 705 A1**
(43) Date of publication of application: **16.01.2019**
(21) Application number: 17763121.5
(22) Date of filing: 03.03.2017
(51) Int. Cl.: G02B 7/04, G03B 15/00

(54) **LENS DRIVE DEVICE, CAMERA MODULE, AND CAMERA MOUNT DEVICE**

(30) Priority: 07.03.2016 JP 2016043907
(71) Applicant: Mitsumi Electric Co., Ltd., Tama-Shi, Tokyo 206-8567 (JP)
(72) Inventor: ARANAI, Masahiko, Tama-shi, Tokyo 206-8567 (JP)
(74) Representative: Epping - Hermann - Fischer
(86) International application number: PCT/JP2017/008535
(87) International publication number: WO 2017/154781

(57) **Abstract**

Provided are a lens drive device, a camera module, and a camera mount device which have a desired thrust and linear performance, and which can be made smaller and thinner. The lens drive device is provided with: a flat AF coil, having a first linear part positioned on the light-receiving side in the optical axis direction, and a second linear part positioned on the image-forming side in the optical axis direction; a single-surface-two-pole AF magnet, configured with a first magnet facing the first linear part and a second magnet facing the second linear part; and a yoke arranged so as to cover the surface of the first magnet on the light-receiving side in the optical axis direction. The surface area of the first magnet surface facing the first linear part is greater than the surface area of the second magnet surface facing the second linear part, and the magnetic flux that crosses the first linear part is greater than the magnetic flux that crosses the second linear part across the entire movable range of an AF moving part.

## Description

### Technical Field

The present invention relates to an auto-focusing lens driving device, and to a camera module and a camera-mounted device that have an autofocus function.

### Background Art

In general, a small-sized camera module is mounted in mobile terminals, such as smartphones. A lens driving device having an autofocus function of automatically performing focusing during capturing a subject (hereinafter referred to as "AF (Auto Focus) function") is applied in such a camera module (see e.g. Patent Literatures (hereinafter referred to as "PTLS") 1 and 2).

The auto-focusing lens driving device includes, for example, an auto-focusing coil (hereinafter referred to as "AF coil") disposed at the periphery of the lens part, an auto-focusing magnet (hereinafter referred to as "AF magnet") disposed to be radially spaced apart from the AF coil, and an elastic supporting part (for example, plate spring) for elastically supporting an autofocus movable part (hereinafter referred to as "AF movable part") including the lens part and the AF coil, for example, with respect to an autofocus fixing part (hereinafter referred to as "AF fixing part") including the AF magnet. Focusing is automatically carried out by moving the AF movable part with respect to the AF fixing part in the optical-axis direction by utilizing a driving force of a voice coil motor composed of the AF coil and the AF magnet. Note that, the AF fixing part may include the AF coil and the AF movable part may include the AF magnet.

Lens driving devices disclosed in PTLS 1 and 2 are each provided with a yoke which forms a magnetic circuit with an AF magnet, and this yoke serves as a casing of the lens driving device. In addition, the yoke is formed such that the inner peripheral edge of top panel of the yoke entirely projects inward in order to increase the thrust of the AF voice coil motor, and an opposite yoke portion is provided at a position facing the AF magnet with the AF coil therebetween.

### Citation List

### Patent Literature

PTL 1
   Japanese Patent Application Laid-Open No. 2014-016572
PTL 2
   Japanese Patent Application Laid-Open No. 2014-225042

### Summary of Invention

### Technical Problem

Meanwhile, there have been demands to achieve further miniaturization and height reduction of camera modules mounted in mobile terminals, such as smartphones, tablet PCs, and/or the like. However, the miniaturization and height reduction of camera modules are generally accompanied by decrease in thrust and/or by degradation in linearity performance. Therefore, it is important to achieve the miniaturization and height reduction while avoiding such characteristic deterioration. The linearity performance is an index indicating a relationship between a stroke of AF movable part and a required driving force, and the linearity performance is high when this relationship is linear. It is preferable that the linearity performance be high in the camera modules for controlling the energization current to an AF coil.

An object of the present invention is to provide a lens driving device, a camera module, and a camera-mounted device which have desired thrust and linearity performance while making it possible to achieve miniaturization and height reduction.

### Solution to Problem

A lens driving device in which one aspect of the present invention is reflected includes: an auto-focusing coil to be disposed at a periphery of a lens part; an auto-focusing magnet to be disposed to be radially spaced apart from the auto-focusing coil; and a yoke configured to form a magnetic circuit with the auto-focusing magnet. The lens driving device is configured to automatically perform focusing by moving, with respect to an autofocus fixing part including the auto-focusing magnet and the yoke, an autofocus movable part including the auto-focusing coil in an optical-axis direction by utilizing a driving force of a voice coil motor composed of the auto-focusing coil and the auto-focusing magnet. The auto-focusing coil is an elliptic flat coil including a first linear portion and a second linear portion, and the auto-focusing coil is disposed such that the first linear portion is on a light reception side in the optical-axis direction and the second linear portion is on an image formation side in the optical-axis direction. The auto-focusing magnet is composed of a first magnet and a second magnet, the auto-focusing magnet has two poles on each side, and the auto-focusing magnet is disposed such that the first magnet faces the first linear portion and the second magnet faces the second linear portion. The yoke is disposed to cover a surface of the first magnet on the light reception side in the optical-axis direction. The area of a surface of the first magnet facing the first linear portion is greater than the area of a surface of the second magnet facing the second linear portion. A magnetic flux crossing the first linear portion is greater than a magnetic flux crossing the second linear portion throughout a range of movement of the autofocus movable part.

A camera module in which one aspect of the present invention is reflected includes: the lens driving device as described above; a lens part to be mounted in the lens driving device; and an image capturing part configured to capture a subject image imaged by the lens part.

A camera-mounted device in which one aspect of the present invention is reflected is an information device or a transporting device, and includes the camera module as described above.

### Advantageous Effects of Invention

According to the present invention, a lens driving device, a camera module, and a camera-mounted device which have desired thrust and linearity performance while making it possible to achieve miniaturization and height reduction are provided.

### Brief Description of Drawings

FIGS. 1A and 1B illustrate a smartphone in which a camera module according to an embodiment of the present invention is mounted;
FIG. 2 is a perspective view of an external appearance of the camera module;
FIG. 3 is an exploded perspective view of a lens driving device as seen from above;
FIG. 4 is an exploded perspective view of the lens driving device as seen from below;
FIG. 5 is a perspective view illustrating the positional relationship between AF coils and AF magnets;
FIG. 6 is a side view illustrating the positional relationship between the AF coils and the AF magnets;
FIG. 7 is a sectional view taken along the Y-direction and illustrating the positional relationship between the AF coils and the AF magnets; and
FIGS. 8A and 8B illustrate an automobile as a camera-mounted device in which an in-vehicle camera module is mounted.

### Description of Embodiments

Hereinafter, an embodiment of the present invention will be described in detail with reference to the drawings.

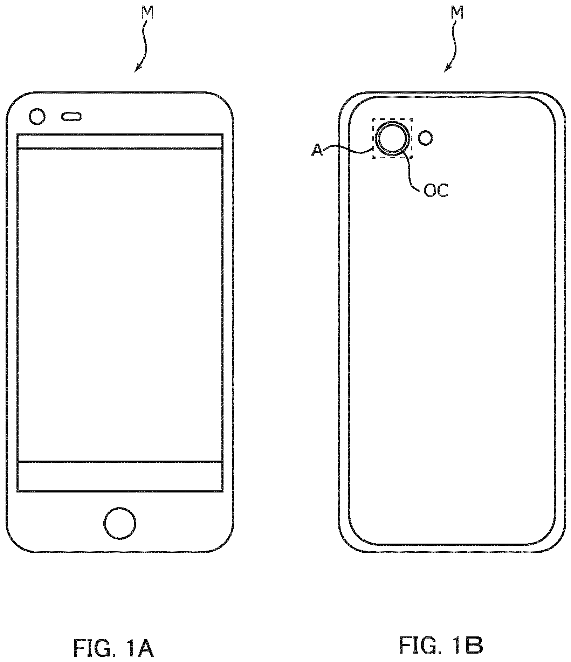

FIGS. 1A and 1B illustrate smartphone M (camera-mounted device) in which camera module A according to an embodiment of the present invention is mounted. Camera module A has an autofocus function, and automatically performs focusing during capturing a subject.

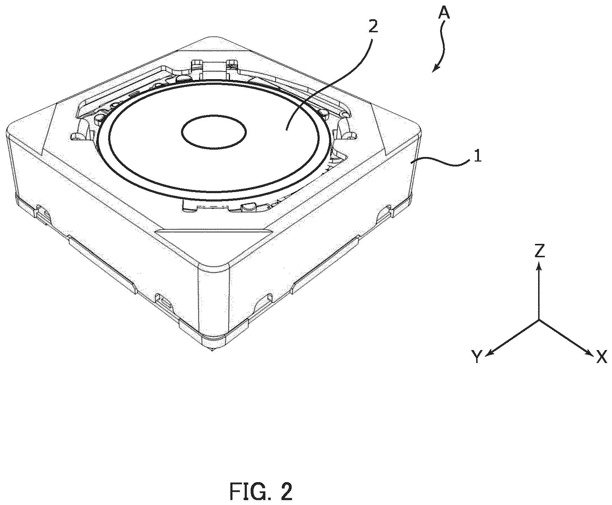

FIG. 2 is a perspective view of an external appearance of camera module A. As illustrated in FIG. 2, descriptions will be given for the embodiment of the present invention with an orthogonal coordinate system (X, Y, Z). The same orthogonal coordinate system (X, Y, Z) is also used for illustration of below-mentioned figures. Lens driving device 1 is mounted such that the front-rear direction is the Z-direction during actually capturing an image with smartphone M. That is, the Z-direction is the optical-axis direction, the upper side in the figures is the light reception side in the optical-axis direction (also referred to as "macro position side"), and the lower side is the image formation side in the optical-axis direction (also referred to as "infinity position side"). In addition, the X- and Y-directions orthogonal to the Z-axis are referred to as "optical-axis-orthogonal directions."

Camera module A includes: lens part 2 including a cylindrical lens barrel and a lens housed therein; AF lens driving device 1; an image capturing part (not illustrated) configured to capture a subject image imaged by lens part 2, and the like.

The image capturing part (not illustrated) includes an imaging device (not illustrated) and an image-sensor board (not illustrated) to which the imaging device is mounted, and the image capturing part is disposed on the image formation side in the optical-axis direction of lens driving device 1. The imaging device (not illustrated) is composed of, for example, a charge-coupled device (CCD) image sensor, a complementary metal oxide semiconductor (CMOS) image sensor, or the like. The imaging device (not illustrated) captures a subject image imaged by lens part 2, converts optical signals into electrical signals, and outputs converted signals to a control section (not illustrated) that performs image processing and/or the like.

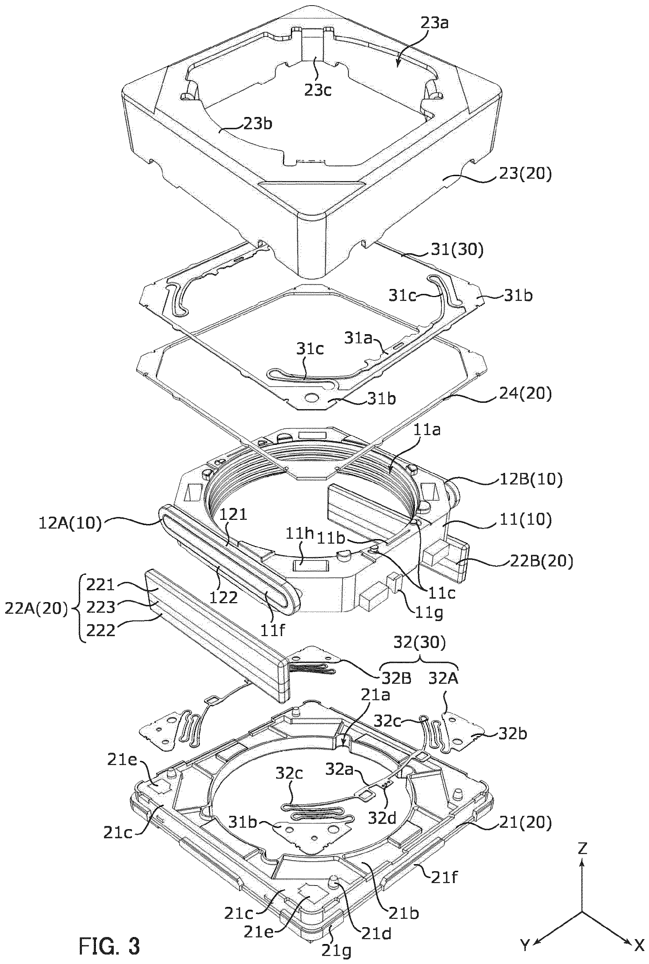

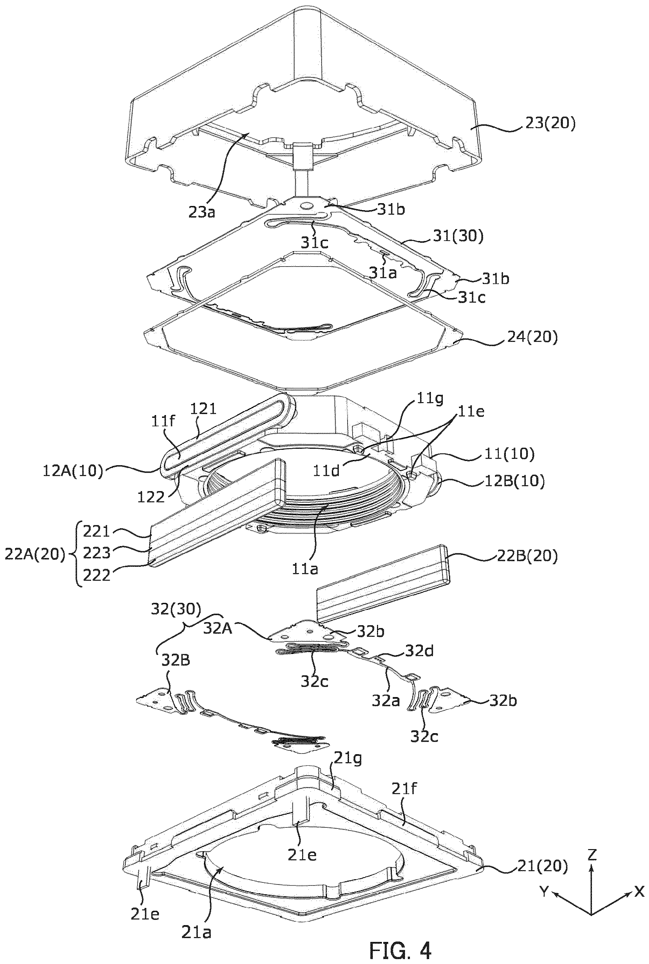

FIGS. 3 and 4 are an exploded perspective view of lens driving device 1. FIG. 3 is the upper exploded perspective view seen from the light reception side in the optical-axis direction, and FIG. 4 is the lower exploded perspective view seen from the image formation side in the optical-axis direction. As illustrated in FIGS. 3 and 4, lens driving device 1 includes AF movable part 10, AF fixing part 20, elastic supporting member 30, and the like. AF movable part 10 is disposed to be radially inwardly spaced apart from AF fixing part 20, and is coupled with AF fixing part 20 by elastic supporting member 30.

AF movable part 10 includes AF coils being a component of the AF voice coil motor, and moves in the optical-axis direction during focusing. AF fixing part 20 includes AF magnets being a component of the AF voice coil motor. That is, the moving-coil system is employed in lens driving device 1.

In the embodiment of the present invention, AF movable part 10 is composed of lens holder 11 and AF coils 12A and 12B. AF fixing part 20 is composed of base 21, AF magnets 22A and 22B, yoke 23, and spacer 24. Upper elastic supporting member 31 and lower elastic supporting member 32 constitute elastic supporting member 30.

Lens holder 11 is a cylindrical member that is octagonal in plan view, and includes lens housing 11a at its center. Lens part 2 (see FIG. 2) is fixed to lens housing 11a by adhesion or screwing.

Lens holder 11 includes, at two portions of upper surface of lens holder 11 extending along the Y-direction, upper-spring fixing portions 11b to which upper elastic supporting member 31 is fixed. Upper-spring fixing portions 11b include positioning pieces 11c protruding on the light reception side in the optical-axis direction. Upper elastic supporting member 31 is positioned by positioning pieces 11c. Lens holder 11 includes, at four diagonally-situated portions of the upper surface of lens holder 11, yoke insertion portions 11h in which insertion pieces 23c of yokes 23 are inserted.

Lens holder 11 includes, at two portions of undersurface of lens holder 11 extending along the Y-direction, lower-spring fixing portions 11d to which lower elastic supporting member 32 is fixed. Lower-spring fixing portions 11d include positioning pieces 11e protruding on the image formation side in the optical-axis direction. Lower elastic supporting member 32 is positioned by positioning pieces 11e.

Lens holder 11 includes, on two side surfaces of lens holder 11 extending along the Y-direction, tying parts 11g to which the ends of AF coils 12A and 12B are connected. Lens holder 11 includes, on two side surfaces of lens holder 11 extending along the X-direction, coil-attachment portions 11f to which AF coils 12A and 12B are disposed and which is elliptic (shape of a rounded rectangular).

AF coils 12A and 12B are flat air-core coils to be energized at the time of focusing, and are wound along coil-attachment portions 11f. As in AF coils 12A and 12B, employing flat coils makes it possible to dispose AF coils 12A and 12B only to portions of magnetic circuits formed by AF magnets 22A and 22B. Therefore, the driving efficiency improves in comparison with the case where an AF coil is formed by winding a coil around lens holder 11 over the entire circumference of lens holder 11, so that weight reduction and power-saving can be achieved.

AF coils 12A and 12B are elliptic, and each include first linear portion 121 and second linear portion 122. AF coils 12A and 12B are disposed such that a coil plane is parallel to the optical axis, that is, such that the XZ plane is the coil plane in this embodiment. That is, AF coils 12A and 12B are disposed such that first linear portion 121 is on the light reception side (upper side) in the optical-axis direction and second linear portion 122 is on the image formation side (lower side) in the optical-axis direction. The ends of AF coils 12A and 12B are wound around tying parts 11g of lens holder 11 so as to be electrically connected to lower elastic supporting member 32.

AF coils 12A and 12B are preferably formed from a copper clad aluminum wire that is an aluminum wire covered with copper. This makes it possible to achieve weight reduction in comparison with the case where AF coils 12A and 12B are formed using a copper wire.

Base 21 is a square member in plan view, and includes circular opening 21a at the center of base 21. Base 21 includes depressed portions 21b having a shape corresponding to the lower portion of lens holder 11. In camera module A, the image capturing part (not illustrated) is disposed on the image formation side of base 21 in the optical-axis direction.

Base 21 includes, at its four corners, lower-spring fixing portions 21c to which lower elastic supporting member 32 is fixed. Lower-spring fixing portions 21c each include positioning boss 21d protruding toward lens holder 11 (on the light reception side in the optical-axis direction). Lower elastic supporting member 32 is positioned by positioning bosses 21d.

Terminal metal fixtures 21e are disposed to two lower-spring fixing portions 21c, for example, by insert molding. The one ends of terminal metal fixtures 21e are electrically connected to lower elastic supporting member 32, and the other ends are electrically connected to a power-source line (not illustrated) of an image sensor board (not illustrated).

Base 21 includes, at its peripheral surface, yoke attaching pieces 21f and 21g on which yoke 23 is placed. Yoke 23 is positioned by yoke attaching pieces 21f. Yoke 23 is fixed, for example, adhesively to yoke attaching pieces 21f and 21g while being placed on yoke attaching pieces 21f and 21g.

AF magnets 22A and 22B are each composed of first magnet 221 and second magnet 222, and each have two poles on each side. First magnet 221 and second magnet 222 are magnetized in mutually opposite directions along the inward-and-outward direction.

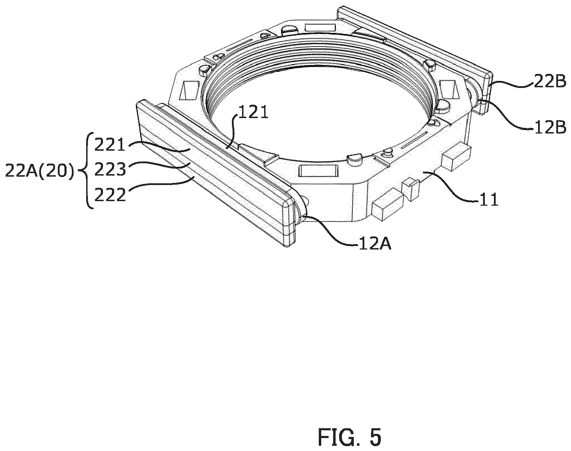

AF magnets 22A and 22B are arranged outside AF coils 12A and 12B, respectively (see FIG. 5). AF magnets 22A and 22B are each disposed such that first magnet 221 is arranged on the light reception side in the optical-axis direction and second magnet 222 is arranged on the image formation side in the optical-axis direction. That is, first magnets 221 face first linear portions 121 of AF coils 12A and 12B, and second magnets 222 face second linear portions 122 of AF coils 12A and 12B.

Magnetic fields formed by first magnets 221 cross first linear portions 121, and magnetic fields formed by second magnets 222 cross second linear portions 122. Since the directions of the magnetic fields formed by first magnets 221 are opposite respectively to the directions of the magnetic fields formed by second magnets 222, the Lorentz forces in the same direction along the Z-direction are generated in first linear portion 121 and second linear portion 122 when AF coils 12A and 12B are energized. As described above, AF magnets 22A and 22B and AF coils 12A and 12B constitute the AF voice coil motor.

Note that, the magnetization directions of AF magnets 22A and 22B and the electrical current directions of AF coils 12A and 12B are set such that the directions of the Lorentz forces generated in AF coils 12A and 12B during energization are the same.

Non-magnetic layers 223 are respectively interposed between first magnets 221 and second magnets 222. It is possible, by adjusting the height of each of non-magnetic layers 223, to easily adjust the regions occupied by first magnet 221 and by second magnet 222 (the areas of opposite surfaces of first and second magnets 221 and 222 respectively facing first and second linear portions 121 and 122) while keeping the entire height of each of AF magnets 22A and 22B.

Yoke 23 is a member that is square in plan view and consists of a magnetic material, and functions as a housing cover of lens driving device 1. The number of parts is reduced by using yoke 23 as the housing cover, so that weight reduction can be achieved and the number of assembly steps can also be reduced.

Yoke 23 includes, at its top panel, opening 23a having a shape corresponding to lens part 2 (see FIG. 2) mounted to lens holder 11. Lens part 2 faces outside from this opening 23a. Upper elastic supporting member 31 is fixed to the reverse side of the top panel of yoke 23.

Yoke 23 includes, at four diagonally-situated portions along the rim of opening 23a, insertion pieces 23c drooping in the Z-direction. Insertion pieces 23c are inserted in yoke insertion portions 11h of lens holder 11. Insertion pieces 23c are disposed to face first magnets 221. In the neutral state where AF coils 12A and 12B are not energized, insertion pieces 23c are spaced apart from the bottoms of yoke insertion portions 11h, respectively. When AF coils 12A and 12B are energized and, accordingly, lens holder 11 moves on the light reception side in the optical-axis direction, insertion pieces 23c approach the bottoms of yoke insertion portions 11h, but do not come into contact therewith.

Yoke 23 holds AF magnets 22A and 22B at two side surfaces of yoke 23 extending along the X-direction. AF magnets 22A and 22B are fixed to the side surfaces of yoke 23, for example adhesively. AF magnets 22A and 22B are covered, on its light reception side in the optical-axis direction, by eaves portion 23b of yoke 23 which is situated at the rim of opening 23a. Magnetic circuits are formed by yoke 23 and AF magnets 22A and 22B, so that the driving efficiency improves. In AF magnets 22A and 22B, the upper portions of first magnets 221 are covered by eaves portion 23b of yoke 23 and, moreover, insertion pieces 23c of yoke 23 are disposed to face first magnets 221, so that the magnetic flux densities of the magnetic circuits formed by first magnets 221 are higher than the magnetic flux densities of the magnetic circuits formed by second magnets 222.

Upper elastic supporting member 31 is a plate spring made of beryllium copper, nickel copper, stainless steel, or the like, for example (upper elastic supporting member 31 may hereinafter be referred to as "upper spring 31"). Upper spring 31 elastically supports AF movable part 10 (lens holder 11) with respect to AF fixing part 20 (yoke 23).

Upper spring 31 is shaped by being punched out from one sheet metal, for example. Upper spring 31 includes lens-holder holding portions 31a, yoke fixing portions 31b, and arm portions 31c. Lens-holder holding portions 31a have a shape conforming to upper-spring fixing portions 11b of lens holder 11, and have cutouts at portions corresponding to positioning pieces 11c. Arm portions 31c connect yoke fixing portions 31b to lens-holder holding portions 31a. Arm portions 31c have a curved shape, and elastically deform when AF movable part 10 moves.

Upper spring 31 is positioned to lens holder 11 and fixed thereto by engagement of cutouts (whose reference numeral is omitted) of lens-holder holding portions 31a with positioning pieces 11c of lens holder 11. Moreover, upper spring 31 is fixed to yoke 23 by adhesion of yoke fixing portions 31b to the reverse side of the top panel of yoke 23. Upper spring 31 is sandwiched between yoke 23 and spacer 24. When AF movable part 10 moves in the optical-axis direction, lens-holder holding portion 31a is displaced along with AF movable part 10.

Lower elastic supporting member 32 is composed of two plate springs made of beryllium copper, nickel copper, stainless steel, or the like, for example (lower elastic supporting member 32 may hereinafter be referred to as "lower springs 32A and 32B"). Lower springs 32A and 32B elastically support AF movable part 10 (lens holder 11) with respect to AF fixing part 20 (base 21).

Lower springs 32A and 32B are shaped by being punched out from one sheet metal, for example. Lower springs 32A and 32B each include lens-holder holding portion 32a, base fixing portions 32b, and arm portions 32c. Lens-holder holding portions 32a have a shape conforming to lower-spring fixing portions 11d of lens holder 11. Arm portions 32c couple base fixing portions 32b to lens-holder holding portions 32a. Arm portions 32c partly have a winding road shape, and elastically deform when AF movable part 10 moves.

Lower springs 32A and 32B include, at lens-holder fixing portions 32a, tying connection portions 32d, respectively. Tying connection portions 32d are electrically connected to AF coils 12A and 12B wound around tying parts 11g of lens holder 11. Base fixing portions 32b are electrically connected to terminal metal fixtures 21e disposed to base 21. Electricity is supplied to AF coils 12A and 12B via lower springs 32A and 32B.

Lower springs 32A and 32B are positioned to lens holder 11 and fixed thereto by fitting positioning pieces 11e of lens holder 11 in fixing holes (whose reference numeral is omitted) of lens-holder holding portions 32a. Moreover, lower springs 32A and 32B are positioned to base 21 and fixed thereto by fitting positioning bosses 21d of base 21 in fixing holes (whose reference numeral is omitted) of base fixing portions 32b. When AF movable part 10 moves in the optical-axis direction, lens-holder holding portions 32a are displaced along with AF movable part 10.

When automatic focusing is performed in lens driving device 1, AF coils 12A and 12B are energized. When AF coils 12A and 12B are energized, a Lorentz force is generated at AF coils 12A and 12B by interaction between the magnetic fields of AF magnets 22A and 22B and the currents flowing through AF coils 12A and 12B. The direction of the Lorentz force is the direction (the Z-direction) orthogonal to the directions of the magnetic fields generated by AF magnets 22A and 22B and to the directions of the currents flowing through AF coils 12A and 12B. Since AF magnets 22A and 22B are fixed, a reactive force acts on AF coils 12A and 12B. With this reactive force serving as the driving force of the AF voice coil motor, AF movable part 10 including AF coils 12A and 12B moves in the optical-axis direction, so that focusing is performed.

In an non-energization state where automatic focusing is not performed, AF movable part 10 is held suspended between an infinity position and a macro position, for example, by upper elastic supporting member 31 and lower elastic supporting member 32 (this state may hereinafter be referred to as "reference state"). That is, AF movable part 10 is elastically supported to be displaceable on both sides in the Z-direction while being positioned with respect to AF fixing part 20 by upper elastic supporting member 31 and lower elastic supporting member 32. When focusing is performed, the directions of currents are controlled depending on whether AF movable part 10 is to be moved toward the macro position side or toward the infinity position side from the reference state. In addition, the magnitude of currents is controlled depending on the moving distance (stroke) of AF movable part 10 from the reference state.

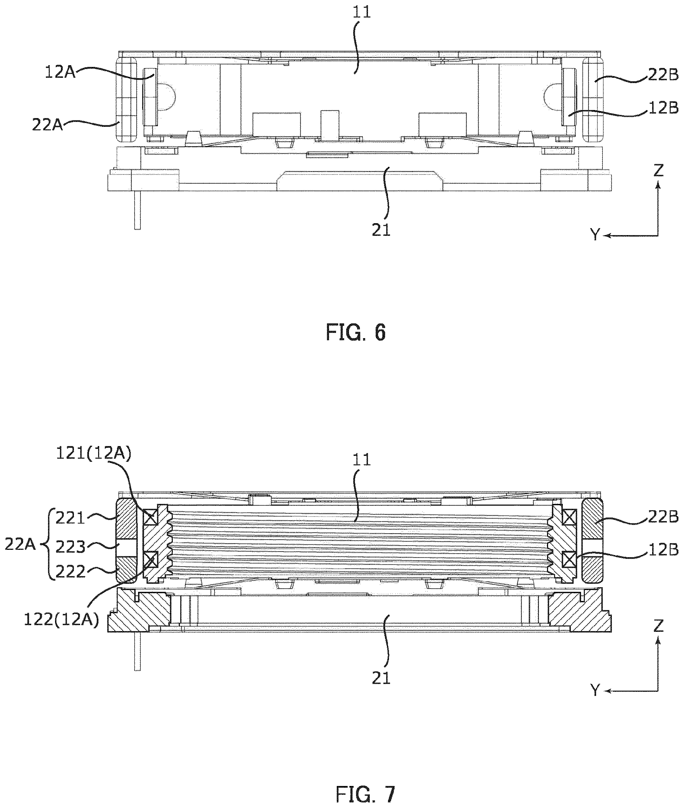

FIG. 6 is a side view illustrating the positional relationship between AF coils 12A and 12B and AF magnets 22A and 22B. FIG. 7 is a sectional view taken along the Y-direction and illustrating the positional relationship between AF coils 12A and 12B and AF magnets 22A and 22B.

As illustrated in FIGS. 6 and 7, the proportions of first magnets 221 are larger than the proportions of second magnets 222 in AF magnets 22A and 22B in the embodiment of the present invention. That is, the areas of surfaces of first magnets 221 facing first linear portions 122 are greater than the areas of surfaces of the second magnets 222 facing second linear portions 121.

The areas of first magnets 221 are set such that first magnets 212 face first linear portions 121 throughout the range of movement of AF movable part 10. With this configuration, the magnetic fluxes generated by first magnets 221 perpendicularly cross first linear portions 121 of AF coils 12A and 12B, respectively, throughout the range of movement of AF movable part 10.

Meanwhile, the areas of second magnets 222 are set such that the linearity performance can be achieved. Second magnets 222 may be outside the regions where second magnets 222 face second linear portions 122, when AF movable part 10 moves in the optical-axis direction. That is, second linear portions 122 do not have to face second magnets 222 in a part of the range of movement of AF movable part 10.

Since, in AF magnets 22A and 22B, first magnets 221 are covered by eaves portion 23b of yoke 23 on their upper sides, the magnetic flux densities in the magnetic circuits formed by first magnets 221 are higher than the magnetic flux densities in the magnetic circuits formed by second magnets 222. That is, the densities of the magnetic fluxes crossing first linear portions 121 of AF coils 12A and 12B are higher than the densities of the magnetic fluxes crossing second linear portions 122. Besides, AF coils 12A and 12B and AF magnets 22A and 22B are disposed such that the positional relationship as described above is achieved, so that the magnetic fluxes crossing first linear portions 121 are made still greater than the magnetic fluxes crossing second linear portions 122 throughout the range of movement of AF movable part 10. Therefore, although the thrust of AF movable part 10 is represented by the sum of Lorentz forces F1 arising in first linear portions 121 and Lorentz forces F2 arising in second linear portions 122 of AF coils 12A and 12B, the effect of Lorentz forces F2 are smaller and Lorentz forces F1 are dominant.

In an attempt to obtain desired thrust in lens driving device 1 in a situation where the sizes of AF magnets 22A and 22B are restricted for achieving miniaturization and height reduction, the thrust balance may be optimized by adjusting the sizes of first magnets 221, and, then adjusting the sizes of second magnets 222 for ensuring the linearity performance. Therefore, it becomes easier to design.

As described above, lens driving device 1 includes: AF coils 12A and 12B to be disposed at the periphery of lens part 2; AF magnets 22A and 22B to be disposed to be radially spaced apart from AF coils 12A and 12B; and yoke 23 adapted to form the magnetic circuits with AF magnets 22A and 22B. Lens driving device 1 is configured to automatically perform focusing by moving, with respect to AF fixing part 20 including AF magnets 22A and 22B and yoke 23, AF movable part 10 including AF coils 12A and 12B in the optical-axis direction by utilizing the driving force of the voice coil motor composed of AF coils 12A and 12B and AF magnets 22A and 22B. AF coils 12A and 12B are each an elliptic flat coil including first linear portion 121 and second linear portion 122, and are each disposed such that first linear portion 121 is on the light reception side in the optical-axis direction and second linear portion 122 is on the image formation side in the optical-axis direction. AF magnets 22A and 22B are each composed of first magnet 221 and second magnet 222, each have two poles on each side, and are each disposed such that first magnet 221 faces first linear portion 121 and second magnet 222 faces second linear portion 122. Yoke 23 is disposed to cover the surface of first magnets 221 on the light reception side in the optical-axis direction. The areas of surfaces of first magnets 221 facing first linear portions 122 are greater than the areas of surfaces of second magnets 222 facing second linear portions 121. The magnetic fluxes crossing first linear portions 121 are greater than the magnetic fluxes crossing second linear portions 122 throughout the range of movement of AF movable part 10.

According to lens driving device 1, since Lorentz forces F1 arising in first linear portions 121 of AF coils 12A and 12B are dominant in the thrust of AF movable part 10, it becomes easier to design lens driving device 1 in a case where it is intended to achieve miniaturization and thickness reduction. Therefore, lens driving device 1 has the desired thrust and linearity performance (linearity), and it is possible to achieve miniaturization and thickness reduction of lens driving device 1. In addition, as for camera module A provided with lens driving device 1 whose size is miniaturized and whose height is reduced, the number of degrees of freedom of the layout of such camera module A is high, so that camera module A is useful when mounted in a mobile terminal, such as a smartphone or the like, and particularly when multiple camera modules A are mounted in the mobile terminal.

While the invention made by the present inventor has been specifically described based on the preferred embodiment, it is not intended to limit the present invention to the above-mentioned preferred embodiment but the present invention may be further modified within the scope and spirit of the invention defined by the appended claims.

For example, the set of the AF coil and the AF magnet is not limited to two sets as in the embodiment, but may also be one set, three sets, or more. When two or more sets of the AF coil and the AF magnet are disposed, it is preferable that these sets be disposes point-symmetrically with respect to the optical axis. With this configuration, the stability during focusing improves. Additionally or alternatively, first magnets 221 and second magnets 222 of AF magnets 22A and 22B may be integrally configured or may be separate members stacked on one another.

For example, although the embodiment has been described by mentioning a smartphone as an example of a camera-mounted device having camera module A, the present invention is applicable to a camera-mounted device serving as an information apparatus or a transport apparatus. The camera-mounted device serving as an information device is an information device including a camera module and a control section that processes image information obtained with the camera module, and examples of such a camera-mounted device include a camera-equipped mobile phone, a note-type personal computer, a tablet terminal, a mobile game machine, a web camera, and a camera-equipped in-vehicle apparatus (for example, a rear-view monitor apparatus or a drive recorder apparatus). In addition, the camera-mounted device serving as a transporting device is a transporting device including a camera module and a control part that processes an image obtained with the camera module, and examples of such a camera-mounted device include an automobile.

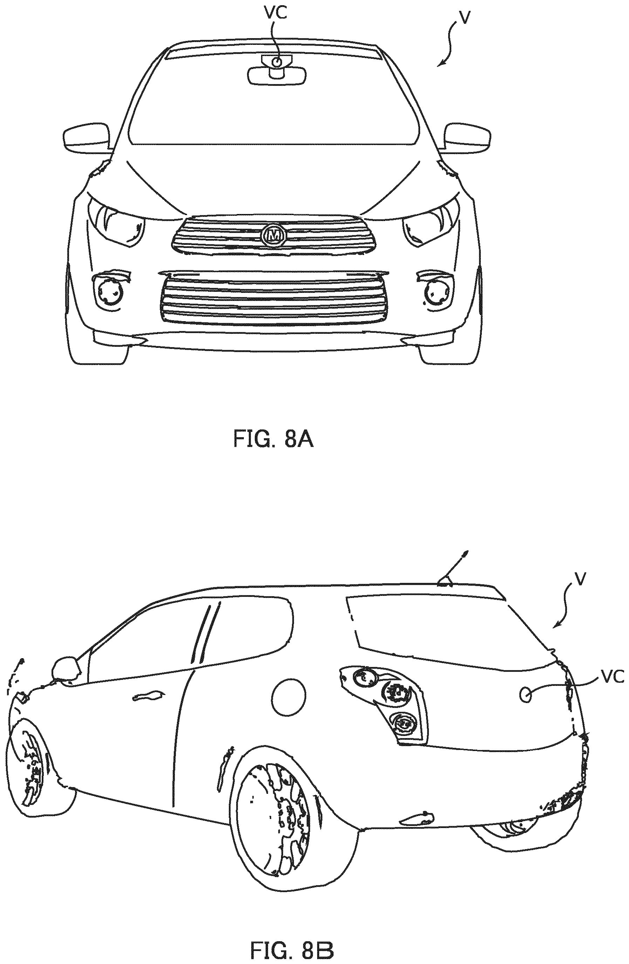

FIGS. 8A and 8B illustrate automobile V serving as the camera-mounted device in which camera module VC (Vehicle Camera) is mounted. FIG. 8A is a front view of automobile V and FIG. 8B is a rear perspective view of automobile V. In automobile V, camera module A described in the embodiment is mounted as in-vehicle camera module VC. As illustrated in FIGS. 8A and 8B, in-vehicle camera module VC may, for example, be attached to the windshield so as to face forward, or to the rear gate so as to face backward. Onboard camera module VC is used for rear monitoring, drive recording, collision avoidance control, automatic drive control, and the like.

The embodiment disclosed herein is merely an exemplification in every respect and should not be considered as limitative. The scope of the present invention is specified by the claims, not by the above-mentioned description. The scope of the present invention is intended to include all modifications in so far as they are within the scope of the appended claims or the equivalents thereof.

This application is entitled to and claims the benefit of Japanese Patent Application No. 2016-043907 dated March 7, 2016, the disclosure of which including the specification, drawings and abstract is incorporated herein by reference in its entirety.

### Reference Signs List

1 Lens driving device
2 Lens part
10 AF movable part (autofocus movable part)
11 Lens holder
12A, 12B AF coil (auto-focusing coil)
121 First linear portion
122 Second linear portion
20 AF fixing part (autofocus fixing part)
21 Base
22A, 22B AF magnet (auto-focusing magnet)
221 First magnet
222 Second magnet
223 Non-magnetic layer
23 Yoke
30 Elastic supporting member
31 Upper elastic supporting member
32 Lower elastic supporting member
M Smartphone (camera-mounted device)
A Camera module

## Claims

1. A lens driving device, comprising:
an auto-focusing coil to be disposed at a periphery of a lens part;
an auto-focusing magnet to be disposed to be radially spaced apart from the auto-focusing coil; and
a yoke configured to form a magnetic circuit with the auto-focusing magnet, the lens driving device being configured to automatically perform focusing by moving, with respect to an autofocus fixing part including the auto-focusing magnet and the yoke, an autofocus movable part including the auto-focusing coil in an optical-axis direction by utilizing a driving force of a voice coil motor composed of the auto-focusing coil and the auto-focusing magnet,
wherein the auto-focusing coil is an elliptic flat coil including a first linear portion and a second linear portion, and the auto-focusing coil is disposed such that the first linear portion is on a light reception side in the optical-axis direction and the second linear portion is on an image formation side in the optical-axis direction,
wherein the auto-focusing magnet is composed of a first magnet and a second magnet, the auto-focusing magnet has two poles on each side, and the auto-focusing magnet is disposed such that the first magnet faces the first linear portion and the second magnet faces the second linear portion,
wherein the yoke is disposed to cover a surface of the first magnet on the light reception side in the optical-axis direction,
wherein an area of a surface of the first magnet facing the first linear portion is greater than an area of a surface of the second magnet facing the second linear portion, and
wherein a magnetic flux crossing the first linear portion is greater than a magnetic flux crossing the second linear portion throughout a range of movement of the autofocus movable part.

2. The lens driving device according to claim 1, wherein:
the first linear portion faces the first magnet throughout the range of movement of the autofocus movable part, and
the second linear portion does not face the second magnet in a part of the range of movement of the autofocus movable part.

3. The lens driving device according to claim 1, wherein
the auto-focusing magnet includes a non-magnetic layer to be interposed between the first magnet and the second magnet.

4. The lens driving device according to claim 1, further comprising:
a plurality of sets of the auto-focusing magnet and the auto-focusing coil, wherein
the plurality of sets are disposed point-symmetrically with respect to an optical axis.

5. The lens driving device according to claim 1, wherein
the yoke functions as a housing cover.

6. A camera module, comprising:
the lens driving device according to claim 1;
a lens part to be mounted in the lens driving device; and
an image capturing part configured to capture a subject image imaged by the lens part.

7. A camera-mounted device that is an information device or a transporting device, the camera-mounted device comprising:
the camera module according to claim 6.
